# FASCICULE DE BREVET EUROPEEN

(11) **EP 4 092 163 B1**
(45) Date de publication et mention de la délivrance du brevet: **14.02.2024**
(21) Numéro de dépôt: 22174313.1
(22) Date de dépôt: 19.05.2022
(51) Int. Cl.: C25B 1/042, C25B 9/73, C25B 9/75, C25B 9/77, C25B 15/08, H01M 8/12, H01M 8/248, H01M 8/2432, F16J 15/08

(54) **ENSEMBLE D'UN EMPILEMENT À OXYDES SOLIDES DE TYPE SOEC/SOFC ET D'UN SYSTÈME DE COUPLAGE ÉTANCHE À HAUTE TEMPÉRATURE AVEC BRIDE DE COUPLAGE**
ANORDNUNG AUS EINEM FESTOXIDSTAPEL VOM TYP SOEC/SOFC UND EINEM DICHTEN HOCHTEMPERATUR-KUPPLUNGSSYSTEM MIT KUPPLUNGSFLANSCH
ASSEMBLY OF A STACK WITH SOLID OXIDES SUCH AS SOFC/SOEC AND A SYSTEM FOR HIGH TEMPERATURE SEALED COUPLING WITH COUPLING FLANGE

(30) Priorité: 20.05.2021 FR 2105242
(43) Date de publication de la demande: 23.11.2022
(73) Titulaire: Commissariat à l'énergie atomique et aux énergies alternatives, 75015 Paris (FR)
(72) Inventeur: DI IORIO, Stéphane, 38054 GRENOBLE CEDEX 09 (FR); GERVASONI, Bastien, 38054 GRENOBLE CEDEX 09 (FR); MONNET, Thibault, 38054 GRENOBLE CEDEX 09 (FR)
(74) Mandataire: Brevalex

(56) Documents cités:
- EP-A1- 2 023 431
- FR-A1- 3 075 481
- FR-A1- 3 100 932
- US-A1- 2002 142 204

## Description

### DOMAINE TECHNIQUE

La présente invention se rapporte au domaine général de l'électrolyse de l'eau à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de l'eau à haute température (EHT) avec le dioxyde de carbone (CO₂).

Plus précisément, l'invention se rapporte au domaine des électrolyseurs à oxydes solides à haute température, désignés habituellement par l'acronyme SOEC (pour « Solide Oxide Electrolyzer Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un ensemble comprenant un empilement à oxydes solides de type SOEC/SOFC et un système de couplage étanche à haute température de l'empilement comprenant une bride de couplage, ainsi qu'un système comprenant un tel ensemble et un four couplé audit empilement par le biais d'un tel système de couplage et un procédé de couplage associé.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) et en dioxygène (Oz), typiquement en air et en gaz naturel, à savoir par du méthane (CH₄). Par souci de simplicité, la description suivante privilégie le fonctionnement d'un électrolyseur à oxydes solides à haute température de type SOEC réalisant l'électrolyse de l'eau. Toutefois, ce fonctionnement est applicable à l'électrolyse du dioxyde de carbone (CO₂), voire encore de la co-électrolyse de l'eau à haute température (EHT) avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en oeuvre l'électrolyse de l'eau à haute température (EHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion souvent en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, combinant ainsi la production de chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le comburant.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

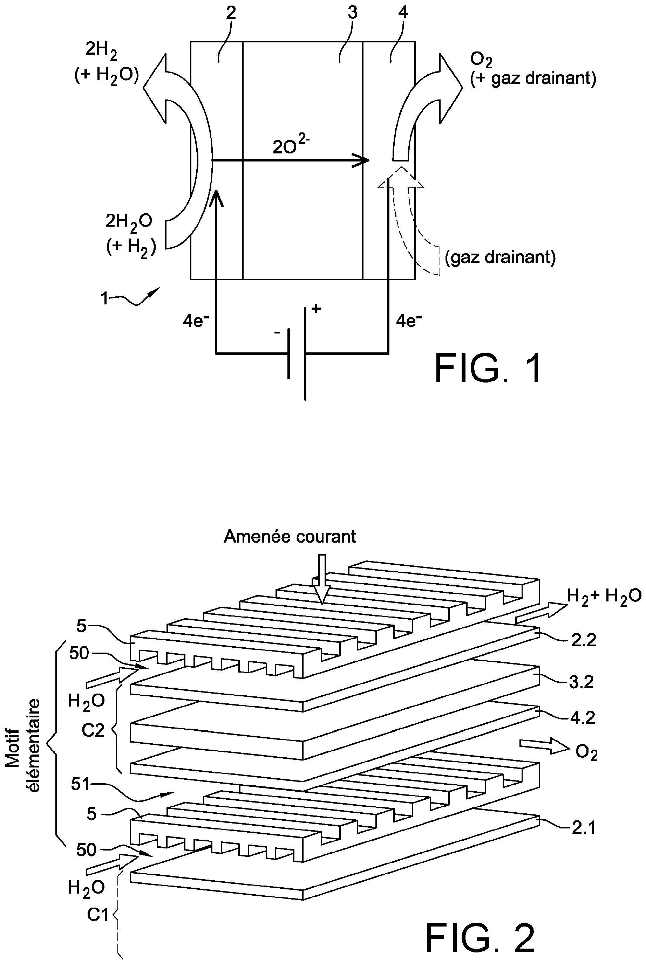

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et des alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est typiquement un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

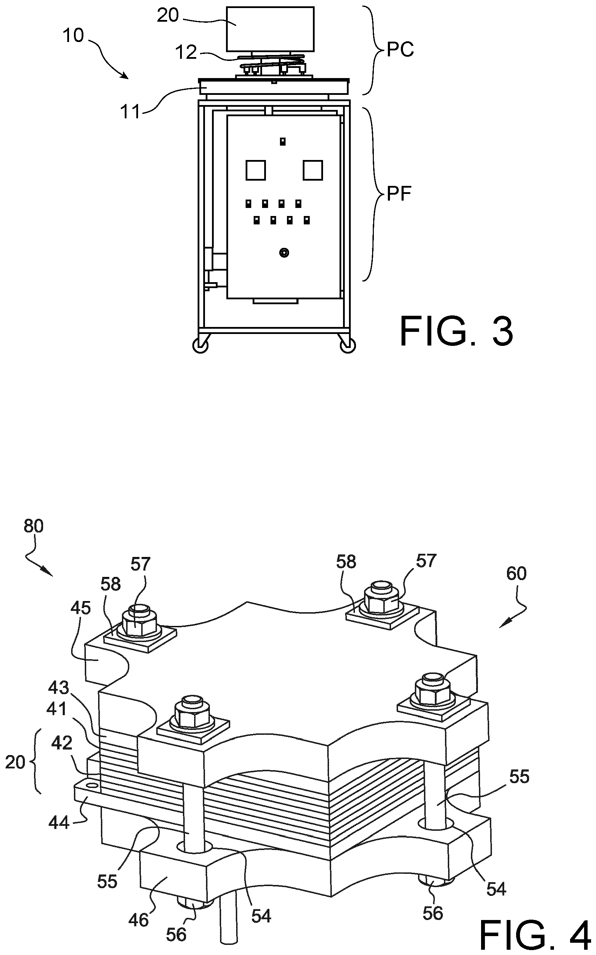

Les gaz entrants et sortants dans un empilement d'électrolyse à haute température (SOEC) ou de pile à combustible (SOFC) fonctionnant à haute température peuvent être gérés par le biais de dispositifs appropriés d'un four tel que celui illustré en référence à la figure 3.

Le four 10 comporte ainsi des parties froides PF et des parties chaudes PC, ces dernières comprenant la sole de four 11, un tube en boucle 12 pour gérer les entrées et sorties de gaz et l'empilement 20, encore appelé « stack », d'électrolyse à haute température (SOEC) ou de pile à combustible (SOFC).

Les couplages des dispositifs d'amenée et de sortie des gaz se font le plus souvent au niveau des parties froides PF, en particulier par des raccords de serrage mécanique double bague, des raccords à étanchéité de surface par joint métallique VCR^{®}, des liaisons soudées ou encore des traversées étanches de cloisons.

Dans le cas des raccords de serrage mécanique double bague, les deux bagues séparent les fonctions d'étanchéité et de serrage de tube. La bague avant crée une étanchéité tandis que la bague arrière permet de faire avancer la bague avant axialement et applique un serrage effectif de tube radialement. Ce principe permet d'obtenir un très bon serrage de tube et une très bonne étanchéité aux fuites de gaz. De plus, son installation est facile et il présente une très bonne résistance à la fatigue causée par les vibrations. Le démontage est aisé en cas d'absence de soudage. Toutefois, ses inconvénients majeurs sont justement son absence de résistance aux hautes températures de sorte que la bague arrière, la bague avant et le tube peuvent se souder ensemble par soudage diffusion rendant la jonction indémontable.

Dans le cas des raccords à étanchéité de surface par joint métallique VCR^{®}, l'étanchéité est obtenue lorsque le joint est compressé par deux bourrelets lors du serrage d'un écrou mâle ou d'un corps six pans avec un écrou femelle. Ce principe permet une très bonne étanchéité, la possibilité d'utiliser des joints différents (nickel, cuivre, inox, ...) selon la configuration la plus appropriée, et un montage/démontage facile avec changement du joint lors de ces opérations. Toutefois, cette solution ne convient pas à haute température, son fonctionnement ne permettant une température maximale que d'environ 537°C.

Dans le cas des liaisons soudées, une étanchéité totale est obtenue par le fait de souder les tubes entre eux par un procédé de type TIG (pour « Tungsten Inert Gas » en anglais) ou par soudeuse orbitale, c'est-à-dire un procédé TIG couplé à une buse rotative. Cependant, les opérations de soudure sur un empilement 20 monté dans un four 10 sont très compliquées du fait de l'accessibilité réduite pour pouvoir souder les tubes sur le pourtour.

Enfin, il existe un système de couplage résistant à une température d'environ 870°C, utilisant des traversées étanches de cloisons pour les passages de capteurs, sondes, signaux électriques et tubes. Ces traversées étanches de cloisons se présentent sous la forme d'un raccord fileté en inox 316L qui est à visser sur la paroi d'une tuyauterie, d'une cuve ou d'un couvercle. Selon leur version, ces traversées accueillent un ou plusieurs éléments traversants, de différents types, tailles et diamètres. Ces traversées permettent donc le passage d'éléments sans discontinuité et ne permettent pas la jonction étanche de deux éléments.

Les couplages des dispositifs d'amenée et de sortie des gaz au niveau des parties froides PF du four 10 constituent un inconvénient majeur car ces parties froides PF sont éloignées des résistances du four 10 et encombrées par les périphériques tels que les échangeurs, les isolants, les condenseurs, entre autres. Ceci implique de privilégier la réalisation des liaisons dans les parties chaudes PC en souhaitant pouvoir les rendre démontables et réutilisables facilement.

De plus, l'utilisation de l'enceinte du four 10 pour préchauffer les gaz d'entrée amène également à réaliser le tube en boucle 12, d'une longueur d'environ 2,5 à 3 m, pour utiliser le rayonnement des résistances chauffantes du four 10, ce qui ajoute de la complexité dans les cintrages pour faire en sorte que les tubes arrivent au bon endroit dans un espace confiné.

En outre, si l'on souhaite pouvoir démonter l'empilement 20 pour pouvoir le faire fonctionner à un autre emplacement, lui conférant alors un caractère de type « Plug & Play » (PnP), soit de type « branche et utilise », il faudrait d'abord rompre les liaisons mécaniquement, par exemple à l'aide d'une scie à métaux, et préparer les nouvelles liaisons pour mettre l'empilement 20 sur un autre four, ce qui complique grandement les manipulations.

Enfin, il est à noter qu'un tel empilement 20 est très fragile et il est nécessaire d'effectuer le moins d'opérations possibles lors d'un changement d'emplacement. Ainsi, il faut notamment pouvoir éviter les vibrations, les chocs et éviter aussi de le retourner.

Les solutions de couplage évoquées précédemment ne permettent pas de répondre aux besoins énoncés ci-dessus. En particulier, les raccords à serrage mécanique double bague se soudent à haute température. Les soudures ne répondent pas à la problématique évoquée du fait de la complexité du soudage (accès difficile) et elles n'évitent pas la découpe des tubes pour le démontage.

Les solutions de couplage de l'art antérieur ne permettent pas de retirer l'empilement 20 d'un four 10 pour le reconnecter sur un autre four 10, c'est-à-dire d'avoir un caractère « Plug & Play », sans rompre les jonctions mécaniquement, ce qui oblige les opérateurs chargés du montage/démontage à réaliser un travail fastidieux de cintrage, de couplage et d'adaptation.

On connaît de la demande de brevet français FR 3 061495 A1 un exemple de système démontable et étanche pour raccordement à haute température en mode SOEC/SOFC. Un joint mica est utilisé entre une embase lisse et une embase filetée pour l'obtention de liaisons étanches démontables et réutilisables. Ce système permet de résoudre le couplage à haute température mais peut toutefois impliquer un taux de fuite trop important. De plus, le joint mica peut laisser des résidus à la suite du cyclage thermique qu'il faut alors supprimer avant montage d'un autre joint.

Par ailleurs, la demande de brevet français FR 3 045 215 A1 décrit le principe d'un système de serrage autonome d'un empilement à oxydes solides de type SOEC/SOFC à haute température, et la demande de brevet français FR 3 100 932 A1 décrit un principe de système de couplage étanche à haute température à partir d'un tel système de serrage.

Précisément, cette demande FR 3 100 932 A1 décrit l'utilisation d'une embase de serrage avec un premier conduit interne traversant permettant le passage d'un tube, une embase d'appui, située dans ce conduit et comprenant un deuxième conduit interne traversant, et un joint d'étanchéité positionné contre une première extrémité de l'embase d'appui. Une plaque de serrage comporte un conduit traversant de passage de gaz avec une surface d'appui du joint d'étanchéité et un lamage fileté pour recevoir un filetage de l'embase de serrage.

Cette solution nécessite toutefois d'avoir le tube situé dans le premier conduit interne traversant qui soit soudé à un autre tube situé dans le deuxième conduit interne traversant. Cette soudure entre deux tubes peut créer des déformations qui vont compliquer la mise en place du système proposé. De plus, elle présente l'inconvénient de devoir usiner en profondeur la plaque de serrage. Également, le joint d'étanchéité se trouve au fond d'une gorge et est comprimé par l'embase d'appui, et il peut être difficile de nettoyer l'embase d'appui lors des opérations de montage et démontage, ce qui limite les performances d'étanchéité. En outre, cette solution peut entraîner une problématique d'encombrement du fait du diamètre important de l'embase d'appui qui nécessite l'usage d'une clé de grande taille dont la manipulation est limitée par la présence du plot d'appui central. La présence d'un seul filetage pour serrer le joint peut aussi conduire à des couples de serrage importants de l'ordre de 12 N.m. Par ailleurs, la solution peut présenter des problèmes de démontage car les filetages peuvent se gripper entre eux du fait d'une formulation de la pâte antigrippant résistante à haute température, à base de cuivre, aluminium et graphite, non optimale. Enfin, cette solution ne détaille pas le procédé permettant de raccorder de manière étanche le stack aux plaques de serrage.

Il existe donc encore un besoin pour améliorer les solutions de couplage connues de l'art antérieur d'un empilement d'électrolyse à haute température (SOEC) ou de pile à combustible (SOFC).

### EXPOSÉ DE L'INVENTION

L'invention a pour but de remédier au moins partiellement aux besoins mentionnés précédemment et aux inconvénients relatifs aux réalisations de l'art antérieur.

L'invention a ainsi pour objet, selon l'un de ses aspects, un ensemble, comportant :
- un empilement à oxydes solides de type SOEC/SOFC fonctionnant à haute température, comportant :
   - une pluralité de cellules électrochimiques formées chacune d'une cathode, d'une anode et d'un électrolyte intercalé entre la cathode et l'anode, et une pluralité d'interconnecteurs intermédiaires agencés chacun entre deux cellules électrochimiques adjacentes,
- un système de serrage de l'empilement à oxydes solides de type SOEC/SOFC, comportant une plaque de serrage supérieure et une plaque de serrage inférieure, entre lesquelles l'empilement à oxydes solides de type SOEC/SOFC est enserré, chaque plaque de serrage comportant au moins deux orifices de serrage, le système de serrage comportant en outre :
   - au moins deux tiges de serrage destinées à s'étendre chacune au travers d'un orifice de serrage de la plaque de serrage supérieure et au travers d'un orifice de serrage correspondant de la plaque de serrage inférieure pour permettre l'assemblage entre elles des plaques de serrage supérieure et inférieure,
   - des moyens de serrage au niveau de chaque orifice de serrage des plaques de serrage supérieure et inférieure destinés à coopérer avec lesdites au moins deux tiges de serrage pour permettre l'assemblage entre elles des plaques de serrage supérieure et inférieure,
caractérisé en ce qu'il comporte en outre :
- au moins un système de couplage étanche à haute température de l'empilement à oxydes solides de type SOEC/SOFC, fixé sur l'une au moins des plaques de serrage supérieure et inférieure, comportant :
   - une bride de couplage fixée sur ladite l'une au moins des plaques de serrage supérieure et inférieure, la bride de couplage comprenant un conduit interne traversant pour permettre le passage d'un tube d'entrée et/ou de sortie de gaz, et au moins un premier orifice de vissage interne traversant comportant un premier filetage interne,
   - au moins une vis de serrage, munie d'une tête de serrage, apte à être vissée dans ledit au moins un premier orifice de vissage interne traversant,
   - un joint d'étanchéité, positionné contre ladite l'une au moins des plaques de serrage supérieure et inférieure et contre une première face d'extrémité, opposée à une deuxième face d'extrémité, de la bride de couplage,
   et en ce que ladite l'une au moins des plaques de serrage supérieure et inférieure comporte au moins un deuxième orifice de vissage interne comprenant un deuxième filetage interne en vis-à-vis du premier filetage interne, ladite au moins une vis de serrage étant apte à être vissée dans ledit au moins un deuxième orifice de vissage interne pour la fixation de la bride de couplage à ladite l'une au moins des plaques de serrage supérieure et inférieure, et comporte un conduit traversant de passage de gaz, destiné à être en communication fluidique avec l'empilement à oxydes solides de type SOEC/SOFC et ledit tube d'entrée et/ou de sortie de gaz.

L'ensemble selon l'invention peut en outre comporter l'une ou plusieurs des caractéristiques suivantes prises isolément ou suivant toutes combinaisons techniques possibles.

Avantageusement, ladite l'une au moins des plaques de serrage supérieure et inférieure et la bride de couplage peuvent être réalisées dans le même matériau, notamment en acier inoxydable austénitique, par exemple de type 310S.

De plus, le tube d'entrée et/ou de sortie de gaz peut comporter un enroulement spiralé, comprenant notamment au moins quatre spires, par exemple de diamètre égal à 200 mm pour un tube de diamètre intérieur égal à 10 mm et de diamètre extérieur égal à 12 mm.

Avantageusement encore, ladite au moins une vis de serrage et la bride de couplage peuvent être réalisées dans le même matériau, notamment en acier inoxydable austénitique, par exemple de type 310S.

En outre, le nombre de vis de serrage, le nombre de premiers orifices de vissage internes traversants et le nombre de deuxièmes orifices de vissage internes peut être compris entre 2 et 10, notamment être égal à 4.

La bride de couplage peut comporter au moins un épaulement sur la surface latérale de la bride de couplage, notamment de forme concave.

Le joint d'étanchéité peut être formé par un joint métallique, notamment un joint métallique flexible en forme de « C », comprenant une âme constituée par un ressort hélicoïdal métallique à spires jointives, une première enveloppe en métal dans laquelle est encastré le ressort, et une seconde enveloppe en métal dans laquelle est encastrée la première enveloppe.

L'ensemble peut avantageusement comporter une plaque terminale supérieure et une plaque terminale inférieure, entre lesquelles la pluralité de cellules électrochimiques et la pluralité d'interconnecteurs intermédiaires sont enserrées.

Ladite au moins l'une des plaques de serrage supérieure et inférieure peut présenter une épaisseur comprise entre 10 mm et 40 mm, notamment entre 20 et 30 mm, notamment de l'ordre de 30 mm.

Cette dernière valeur est plus conforme au réalisé actuel

Par ailleurs, l'invention a encore pour objet, selon un autre de ses aspects, un système, caractérisé en ce qu'il comporte :
- un ensemble tel que défini précédemment,
- un four, auquel est raccordé au moins un tube d'entrée et/ou de sortie de gaz, et sur lequel l'empilement à oxydes solides de type SOEC/SOFC fonctionnant à haute température est couplé pour l'amenée et la sortie des gaz par le biais dudit au moins un système de couplage étanche à haute température.

En outre, l'invention a aussi pour objet, selon un autre de ses aspects, un procédé de couplage étanche à haute température d'un empilement à oxydes solides de type SOEC/SOFC mis en oeuvre au moyen d'un ensemble tel que défini précédemment ou d'un système tel que défini précédemment, caractérisé en ce qu'il comporte l'étape de couplage de l'empilement à oxydes solides de type SOEC/SOFC à au moins un tube d'entrée et/ou de sortie de gaz par le biais dudit au moins un système de couplage étanche à haute température.

Le procédé peut comporter l'étape de traitement thermique de la bride de couplage et de ladite au moins une vis de serrage avant couplage.

L'étape de traitement thermique peut consister en un chauffage progressif, notamment par cadence de 5°C/min, jusqu'à une température de traitement thermique prédéterminée, notamment comprise entre 600 et 950°C, notamment encore entre 700 et 870°C, pour atteindre un plateau à la température de traitement thermique prédéterminée, notamment pendant une durée comprise entre 10 min et plusieurs heures, notamment entre 10 min et 1 heure, puis un refroidissement progressif, notamment par cadence de 5°C/min, jusqu'à la température initiale.

Avant couplage, ladite au moins une vis de serrage peut en outre être soumise à l'utilisation d'une pâte anti-grippant résistante à haute température.

La pâte anti-grippant peut présenter dans sa composition une proportion massique de poudre de chrome Cr₃ comprise entre 10 et 90 %, notamment de l'ordre de 50 %.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
La Figure 1 est une vue schématique montrant le principe de fonctionnement d'un électrolyseur à oxydes solides à haute température (SOEC),
La Figure 2 est une vue schématique éclatée d'une partie d'un électrolyseur à oxydes solides à haute température (SOEC) comprenant des interconnecteurs selon l'art antérieur,
La Figure 3 illustre le principe de l'architecture d'un four sur lequel un empilement d'électrolyse à haute température (SOEC) ou de pile à combustible (SOFC) fonctionnant à haute température est placé,
La Figure 4 représente, en perspective et par observation du dessus, un exemple d'un ensemble conforme à l'invention comprenant un empilement à oxydes solides de type SOEC/SOFC et un système de serrage de l'empilement, pouvant comporter un système de couplage étanche à haute température,
La Figure 5 représente, en perspective et par observation du dessous, un autre exemple d'ensemble conforme à l'invention comprenant un empilement à oxydes solides de type SOEC/SOFC et un système de serrage de l'empilement, comprenant en outre quatre systèmes de couplage étanche à haute température,
La Figure 6 représente, selon une vue en coupe longitudinale partielle, un détail de l'ensemble de la figure 5 avec la plaque de serrage inférieure et un système de couplage étanche à haute température,
La Figure 7 représente, selon une partielle en perspective, un exemple de système conforme à l'invention comportant l'ensemble de [Fig. 5] et un four, sur lequel l'empilement à oxydes solides de type SOEC/SOFC est couplé pour l'amenée et la sortie des gaz par le biais de quatre systèmes de couplage étanche à haute température, et
La Figure 8 représente, selon une vue du dessous, un détail de l'ensemble de la figure 5 au niveau d'un système de couplage étanche à haute température.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 3 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un empilement de type SOEC/SOFC lorsque dans sa configuration d'utilisation.

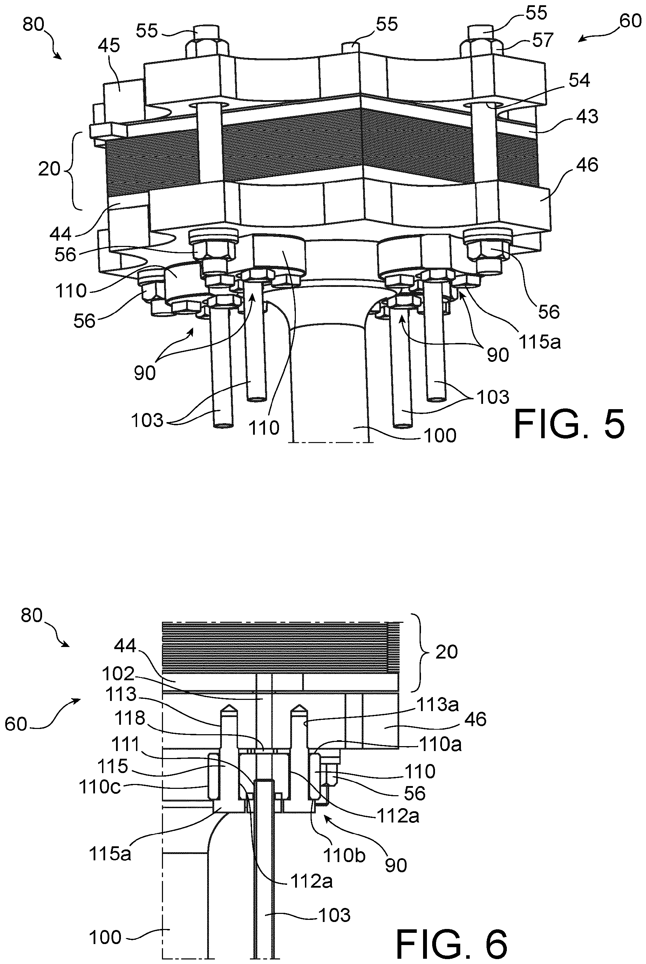

En référence à la figure 4, on a illustré un exemple d'ensemble 80 comprenant un empilement 20 à oxydes solides de type SOEC/SOFC et un système de serrage 60, cet ensemble 80 pouvant comprendre un système de couplage étanche à haute température 90 tel que décrit par la suite en référence aux figures 5 à 8.

De façon avantageuse, l'ensemble 80 selon l'invention présente une structure semblable à celle de l'ensemble décrit dans la demande de brevet français FR 3 045 215 A1, hormis la présence ici d'un système de couplage étanche à haute température 90, c'est-à-dire que l'empilement 20 présente un caractère de type « Plug & Play » (PnP).

Aussi, de façon commune aux différents modes de réalisation de l'invention décrits par la suite, et comme visible sur la figure 4, l'ensemble 80 comporte un empilement 20 à oxydes solides de type SOEC/SOFC fonctionnant à haute température.

Cet empilement 20 comporte une pluralité de cellules électrochimiques 41 formées chacune d'une cathode, d'une anode et d'un électrolyte intercalé entre la cathode et l'anode, et une pluralité d'interconnecteurs intermédiaires 42 agencés chacun entre deux cellules électrochimiques 41 adjacentes. Cet ensemble de cellules électrochimiques 41 et d'interconnecteurs intermédiaires 42 peut également être désigné par « stack ».

De plus, l'empilement 20 comporte une plaque terminale supérieure 43 et une plaque terminale inférieure 44, respectivement également dénommées plaque terminale de stack supérieure 43 et plaque terminale de stack inférieure 44, entre lesquelles la pluralité de cellules électrochimiques 41 et la pluralité d'interconnecteurs intermédiaires 42 sont enserrées, soit entre lesquelles se trouve le stack.

Par ailleurs, l'ensemble 80 comporte aussi un système de serrage 60 de l'empilement 20 à oxydes solides de type SOEC/SOFC, comportant une plaque de serrage supérieure 45 et une plaque de serrage inférieure 46, entre lesquelles l'empilement 20 à oxydes solides de type SOEC/SOFC est enserré.

Chaque plaque de serrage 45, 46 du système de serrage 60 comporte quatre orifices de serrage 54.

De plus, le système de serrage 60 comporte en outre quatre tiges de serrage 55, ou tirants, s'étendant au travers d'un orifice de serrage 54 de la plaque de serrage supérieure 45 et au travers d'un orifice de serrage 54 correspondant de la plaque de serrage inférieure 46 pour permettre l'assemblage entre elles des plaques de serrage supérieure 45 et inférieure 46.

Le système de serrage 60 comporte de plus des moyens de serrage 56, 57, 58 au niveau de chaque orifice de serrage 54 des plaques de serrage supérieure 45 et inférieure 46 coopérant avec les tiges de serrage 55 pour permettre l'assemblage entre elles des plaques de serrage supérieure 45 et inférieure 46.

Plus précisément, les moyens de serrage comportent, au niveau de chaque orifice de serrage 54 de la plaque de serrage supérieure 45, un premier écrou de serrage 56 coopérant avec la tige de serrage 55 correspondante insérée au travers de l'orifice de serrage 54. De plus, les moyens de serrage comportent, au niveau de chaque orifice de serrage 54 de la plaque de serrage inférieure 46, un deuxième écrou de serrage 57 associé à une rondelle de serrage 58, ceux-ci coopérant avec la tige de serrage 55 correspondante insérée au travers de l'orifice de serrage 54. La rondelle de serrage 58 est située entre le deuxième écrou de serrage 57 et la plaque de serrage inférieure 46.

Conformément à l'invention, l'ensemble 80 comporte au moins un système de couplage étanche à haute température 90 de l'empilement 20, par exemple tel que décrit en référence aux figures 5 à 8 mais non visible sur la figure 4.

On va maintenant décrire un tel exemple de système de couplage étanche à haute température 90 en référence aux figures 5 à 8 relatives à un même mode de réalisation représenté selon différentes vues. Ce couplage est réalisé en zone chaude d'arrivée des gaz.

Dans cet exemple, l'ensemble 80 comporte quatre systèmes de couplage étanche à haute température 90 fixés sur la plaque de serrage inférieure 46, à proximité des quatre écrous de serrage 56.

Ainsi, ces quatre systèmes de couplage étanche à haute température 90, pour le couplage au four 10, sont répartis régulièrement autour d'un plot d'appui 100, solidarisé à la plaque de serrage inférieur 46, destiné à permettre l'appui de l'ensemble 80 dans le four 10.

Comme plus particulièrement visible sur la figure 6, chaque système de couplage étanche 90 comporte tout d'abord une bride de couplage 110. Cette bride de couplage 110 comporte une première face d'extrémité 110a en vis-à-vis de la plaque de serrage inférieure 46, et une deuxième face d'extrémité opposée 110b sur laquelle viennent en appui les têtes 105a des vis de serrage 105 décrites par la suite.

De plus, cette bride de couplage 110 comporte un conduit interne traversant 111, débouchant sur les première 110a et deuxième 110b faces d'extrémité, qui permet le passage d'un tube 103 destiné à assurer l'entrée et/ou la sortie de gaz G.

Par ailleurs, chaque bride de couplage 110 comporte quatre premiers orifices de vissage internes traversants 112, débouchant chacun sur les première 110a et deuxième 110b faces d'extrémité et comportant un premier filetage interne 112a pour permettre l'introduction et le vissage de quatre vis de serrage 105, munies chacune d'une tête de vissage 105a. De plus, la plaque de serrage inférieure 46 comporte elle aussi quatre deuxièmes orifices de vissage internes 113 comprenant chacun un deuxième filetage interne 113a pour permettre l'introduction et le vissage des quatre vis de serrage 105. De cette façon, le système de couplage 90 est démontable.

En outre, chaque système de couplage étanche 90 comporte également un joint d'étanchéité compressif 118, préférentiellement métallique, par exemple en forme de « C ». Ce joint d'étanchéité 118 est positionné contre la première face d'extrémité 110a de la bride de couplage 110 et contre la plaque de serrage inférieure 46. De façon avantageuse, la compression du joint d'étanchéité 118 se fait à l'aide de portées planes facilement accessibles.

Avantageusement, le joint d'étanchéité 118 est formé par un joint métallique flexible comprenant : une âme constituée par un ressort hélicoïdal métallique à spires jointives refermé sur lui-même et présentant, à l'état de repos, la forme d'un tore ; une première enveloppe en métal non ductile dans laquelle est encastré le ressort, cette enveloppe ayant, à l'état de repos, la forme d'une surface torique dont le cercle générateur ne se referme pas sur lui-même ; et une seconde enveloppe en métal ductile dans laquelle est encastrée la première enveloppe et ayant elle aussi, à l'état de repos, la forme d'une surface torique dont le cercle générateur ne se referme pas sur lui-même. Un tel exemple de joint d'étanchéité est décrit dans la demande de brevet français FR 2 151186 A1.

Le joint d'étanchéité 118 peut être réalisé en en superalliage à base de nickel, en particulier de type Inconel 600. Il peut présenter un diamètre intérieur d'environ 12,5 mm et un diamètre extérieur d'environ 17,5 mm. Il peut être revêtu d'or et le couple de serrage peut être compris entre 1 N.m et 20 N.m avec pour valeur préférentielle 4 N.m pour éviter une adhérence trop forte.

Afin de pouvoir monter chaque système de couplage étanche 90 sur la plaque de serrage inférieure 46 et assurer l'entrée et/ou la sortie de gaz G, la plaque de serrage inférieure 46 comporte un conduit traversant de passage 102 de gaz G, en communication fluidique avec l'empilement 20 à oxydes solides de type SOEC/SOFC et le tube 103 d'entrée et/ou de sortie de gaz G. Par exemple, le tube 103 peut être soudé au conduit 102, par exemple par procédé TIG ou tout autre moyen de soudure. Le raccordement du tube 103 par soudure dans le conduit interne 111 est facilité car la soudure est réalisée sur une pièce massive qui limite les déformations dues à la soudure.

De façon avantageuse, la plaque de serrage inférieure 46 et les brides de couplage 110 sont réalisées dans le même matériau, notamment en acier inoxydable austénitique, en particulier de type 310S. De cette façon, les dilatations thermiques sont identiques.

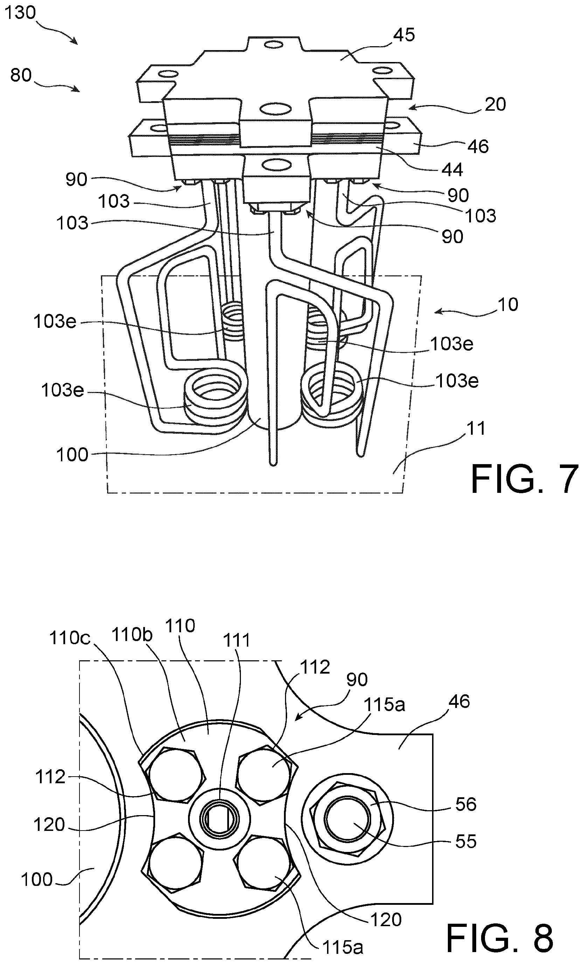

Par ailleurs, comme visible sur la figure 7 qui représente un système 130 conforme à l'invention, chaque tube 103 comporte un enroulement spiralé 103e afin d'augmenter la souplesse de l'ensemble et de pouvoir positionner la première face d'extrémité 110a de la bride de couplage 110 parallèlement à la plaque de serrage inférieure 46. Il faut noter que le nombre de spires et les dimensions, notamment le diamètre, de l'enroulement spiralé 103e vont dépendre du type de tube 103 utilisé. A titre d'exemple, l'enroulement spiralé 103e peut être formé par quatre spires de diamètre égal à 200 mm pour un tube 103 de diamètre intérieur égal à 10 mm et de diamètre extérieur égal à 12 mm.

De façon avantageuse, les vis de serrage 115 sont réalisées dans le même matériau que les brides de couplage 110, notamment en acier inoxydable austénitique, en particulier de type 310S. De cette façon, les dilatations thermiques sont identiques.

Bien que dans l'exemple décrit ici, le nombre de vis de serrage 115 soit égal à 4, ceci n'est aucunement limitatif. En particulier, le nombre de vis de serrage 115 peut être compris entre 2 et 10. L'utilisation de plusieurs vis de serrage 115 permet avantageusement de limiter leur taille et de permettre un serrage de chaque vis moins important de sorte à limiter le grippage. En particulier, un serrage de l'ordre de 1 à 10 N/m est envisageable, et préférentiellement de l'ordre de 4 N/m.

Préférentiellement, avant utilisation des brides de couplage 110 et des vis de serrage 118, un traitement thermique est effectué. Ce traitement consiste à les soumettre à une température augmentant progressivement jusqu'à 800°C avec une cadence de 5°C/min. Puis, un plateau à 800°C est maintenu pendant 1 heure avant de procéder à un refroidissement par une diminution de la température avec une cadence de 5°C/min. Ce traitement thermique peut se faire sous air, sous gaz neutre ou sous gaz réducteur. La valeur de 800°C est préférentielle mais la température de traitement thermique peut être comprise entre 600 et 950°C, et préférentiellement entre 700 et 870°C. De cette façon, les matériaux sont soumis à des températures proches de celles d'utilisation. La vitesse de chauffage n'est pas critique mais le plateau de température, ici préférentiellement indiqué à une durée d'1 heure, peut être compris entre 10 min et plusieurs heures.

Par ailleurs, avant mise en place et serrage, les vis de serrage 115, notamment les pas de vis et les parties sous les têtes 115a, peuvent être soumises à l'utilisation d'une pâte anti-grippant résistante à haute température pour faciliter le démontage et pour éviter le phénomène de soudage diffusion dans les filets lors du cyclage thermique. Cette pâte anti-grippant permet également de lubrifier la liaison et résiste à la corrosion. Elle permet d'éviter le blocage et l'usure excessive de pièces exposées à des températures extrêmes ou en atmosphère dite agressive, par exemple dans le cas de filetages de machines thermiques, de tubulures pour gaz chauds, de brûleurs, de soupapes, de freins à disque, de bougies, d'attaches d'échappements, de galets, de boulons, de collets, etc.

Cette pâte anti-grippant se présente préférentiellement sous la forme d'une graisse comprenant 50% en masse de poudre de chrome Cr₃ et 50% en masse de graisse multi-usage industrielle à base d'huile minérale ou de tout autre constituant. Il faut noter que la teneur de la poudre de Cr₃ est préférentiellement de 50 % en masse mais peut aussi être comprise entre 10 et 90 % en masse. La graisse obtenue a alors une couleur verte caractéristique.

Par ailleurs, la figure 8 permet d'illustrer le fait que chaque bride de couplage 110 comporte au moins un épaulement 120, ici deux épaulements opposés 120, sur sa surface latérale 110c. Cet épaulement 120 est destiné à être situé au niveau du passage des écrous de serrage 56 de sorte à obtenir à la fois un dispositif compact et une facilité de mise en oeuvre.

Bien entendu, l'invention n'est pas limitée aux exemples de réalisation qui viennent d'être décrits. Diverses modifications peuvent y être apportées par l'homme du métier, l'invention n'étant limitée que par la portée telle que définie dans les revendications ci-dessous.

## Revendications

1. Ensemble (80), comportant :
- un empilement (20) à oxydes solides de type SOEC/SOFC fonctionnant à haute température, comportant :
- une pluralité de cellules électrochimiques (41) formées chacune d'une cathode, d'une anode et d'un électrolyte intercalé entre la cathode et l'anode, et une pluralité d'interconnecteurs intermédiaires (42) agencés chacun entre deux cellules électrochimiques (41) adjacentes,
- un système de serrage (60) de l'empilement (20) à oxydes solides de type SOEC/SOFC, comportant une plaque de serrage supérieure (45) et une plaque de serrage inférieure (46), entre lesquelles l'empilement (20) à oxydes solides de type SOEC/SOFC est enserré, chaque plaque de serrage (45, 46) comportant au moins deux orifices de serrage (54), le système de serrage (60) comportant en outre :
- au moins deux tiges de serrage (55) destinées à s'étendre chacune au travers d'un orifice de serrage (54) de la plaque de serrage supérieure (45) et au travers d'un orifice de serrage (54) correspondant de la plaque de serrage inférieure (46) pour permettre l'assemblage entre elles des plaques de serrage supérieure (45) et inférieure (46),
- des moyens de serrage (56, 57, 58) au niveau de chaque orifice de serrage (54) des plaques de serrage supérieure (45) et inférieure (46) destinés à coopérer avec lesdites au moins deux tiges de serrage (55) pour permettre l'assemblage entre elles des plaques de serrage supérieure (45) et inférieure (46),
**caractérisé en ce qu'**il comporte en outre :
- au moins un système de couplage étanche à haute température (90) de l'empilement (20) à oxydes solides de type SOEC/SOFC, fixé sur l'une au moins des plaques de serrage supérieure (45) et inférieure (46), comportant :
- une bride de couplage (110) fixée sur ladite l'une au moins des plaques de serrage supérieure (45) et inférieure (46), la bride de couplage (110) comprenant un conduit interne traversant (111) pour permettre le passage d'un tube (103) d'entrée et/ou de sortie de gaz, et au moins un premier orifice de vissage interne traversant (112) comportant un premier filetage interne (112a),
- au moins une vis de serrage (115), munie d'une tête de serrage (115a), apte à être vissée dans ledit au moins un premier orifice de vissage interne traversant (112),
- un joint d'étanchéité (118), positionné contre ladite l'une au moins des plaques de serrage supérieure (45) et inférieure (46) et contre une première face d'extrémité (110a), opposée à une deuxième face d'extrémité (110b), de la bride de couplage (110),
et **en ce que** ladite l'une au moins des plaques de serrage supérieure (45) et inférieure (46) comporte au moins un deuxième orifice de vissage interne (113) comprenant un deuxième filetage interne (113a) en vis-à-vis du premier filetage interne (112a), ladite au moins une vis de serrage (115) étant apte à être vissée dans ledit au moins un deuxième orifice de vissage interne (113) pour la fixation de la bride de couplage (90) à ladite l'une au moins des plaques de serrage supérieure (45) et inférieure (46), et comporte un conduit traversant de passage (102) de gaz, destiné à être en communication fluidique avec l'empilement (20) à oxydes solides de type SOEC/SOFC et ledit tube (103) d'entrée et/ou de sortie de gaz.

2. Ensemble selon la revendication 1, **caractérisé en ce que** ladite l'une au moins des plaques de serrage supérieure (45) et inférieure (46) et la bride de couplage (110) sont réalisées dans le même matériau, notamment en acier inoxydable austénitique.

3. Ensemble selon la revendication 1 ou 2, **caractérisé en ce que** le tube (103) d'entrée et/ou de sortie de gaz comporte un enroulement spiralé (103e), comprenant notamment au moins quatre spires.

4. Ensemble selon l'une des revendications précédentes, **caractérisé en ce que** ladite au moins une vis de serrage (115) et la bride de couplage (110) sont réalisées dans le même matériau, notamment en acier inoxydable austénitique.

5. Ensemble selon l'une quelconque des revendications précédentes, **caractérisé en ce que** le nombre de vis de serrage (115), le nombre de premiers orifices de vissage internes traversants (112) et le nombre de deuxièmes orifices de vissage internes (113) est compris entre 2 et 10, notamment est égal à 4.

6. Ensemble selon l'une quelconque des revendications précédentes, **caractérisé en ce que** la bride de couplage (110) comporte au moins un épaulement (120) sur la surface latérale (110c) de la bride de couplage (110), notamment de forme concave.

7. Ensemble selon l'une quelconque des revendications précédentes, **caractérisé en ce qu'**il comporte une plaque terminale supérieure (43) et une plaque terminale inférieure (44), entre lesquelles la pluralité de cellules électrochimiques (41) et la pluralité d'interconnecteurs intermédiaires (42) sont enserrées.

8. Système (130), **caractérisé en ce qu'**il comporte :
- un ensemble (80) selon l'une quelconque des revendications précédentes,
- un four (10), auquel est raccordé au moins un tube (103) d'entrée et/ou de sortie de gaz, et sur lequel l'empilement (20) à oxydes solides de type SOEC/SOFC fonctionnant à haute température est couplé pour l'amenée et la sortie des gaz par le biais dudit au moins un système de couplage étanche à haute température (90).

9. Procédé de couplage étanche à haute température d'un empilement (20) à oxydes solides de type SOEC/SOFC mis en oeuvre au moyen d'un ensemble (80) selon l'une quelconque des revendications précédentes ou d'un système (130) selon la revendication 8, **caractérisé en ce qu'**il comporte l'étape de couplage de l'empilement (20) à oxydes solides de type SOEC/SOFC à au moins un tube (103) d'entrée et/ou de sortie de gaz par le biais dudit au moins un système de couplage étanche à haute température (90).

10. Procédé selon la revendication 9, **caractérisé en ce qu'**il comporte l'étape de traitement thermique de la bride de couplage (110) et de ladite au moins une vis de serrage (115) avant couplage.

11. Procédé selon la revendication 10, **caractérisé en ce que** l'étape de traitement thermique consiste en un chauffage progressif, notamment par cadence de 5°C/min, jusqu'à une température de traitement thermique prédéterminée, notamment comprise entre 600 et 950°C, notamment encore entre 700 et 870°C, pour atteindre un plateau à la température de traitement thermique prédéterminée, notamment pendant une durée comprise entre 10 min et plusieurs heures, notamment entre 10 min et 1 heure, puis un refroidissement progressif, notamment par cadence de 5°C/min, jusqu'à la température initiale.

12. Procédé selon la revendication 10 ou 11, **caractérisé en ce que**, avant couplage, ladite au moins une vis de serrage (115) est soumise à l'utilisation d'une pâte anti-grippant résistante à haute température.

13. Procédé selon la revendication 12, **caractérisé en ce que** la pâte anti-grippant présente dans sa composition une proportion massique de poudre de chrome Cr₃ comprise entre 10 et 90 %, notamment de l'ordre de 50 %.

## Patentansprüche

1. Anordnung (80), Folgendes umfassend:
- einen bei hoher Temperatur betreibbaren Festoxidstapel (20) vom Typ SOEC/SOFC, Folgendes umfassend:
- eine Vielzahl von elektrochemischen Zellen (41), die jeweils aus einer Kathode, einer Anode und einem zwischen Kathode und Anode eingefügten Elektrolyten gebildet werden, und eine Vielzahl von intermediären Zwischenverbindungen (42), die jeweils zwischen zwei benachbarten elektrochemischen Zellen (41) angeordnet sind,
- ein Klemmsystem (60) des Festoxidstapels (20) vom Typ SOEC/SOFC, das eine obere Klemmplatte (45) und eine untere Klemmplatte (46) umfasst, zwischen denen der Festoxidstapel (20) vom Typ SOEC/SOFC eingeklemmt ist, wobei jede Klemmplatte (45, 46) mindestens zwei Klemmöffnungen (54) umfasst, wobei das Klemmsystem (60) außerdem Folgendes umfasst:
- mindestens zwei Klemmstangen (55), die dazu bestimmt sind, sich jeweils durch eine Klemmöffnung (54) der oberen Klemmplatte (45) und durch eine entsprechende Klemmöffnung (54) der unteren Klemmplatte (46) zu erstrecken, um das Zusammenfügen der oberen (45) und unteren (46) Klemmplatte untereinander zu ermöglichen,
- Klemmmittel (56, 57, 58) an jeder Klemmöffnung (54) der oberen (45) und unteren (46) Klemmplatte, die dazu bestimmt sind, mit den mindestens zwei Klemmstangen (55) zusammenzuwirken, um das Zusammenfügen der oberen (45) und unteren (46) Klemmplatte untereinander zu ermöglichen,
**dadurch gekennzeichnet, dass** sie außerdem Folgendes umfasst:
- mindestens ein dichtes Hochtemperaturkopplungssystem (90) des Festoxidstapels (20) vom Typ SOEC/SOFC, das an mindestens einer der oberen (45) und unteren (46) Klemmplatten befestigt ist, Folgendes umfassend:
- einen Koppelflansch (110), der an mindestens einer der oberen (45) und unteren (46) Klemmplatte befestigt ist, wobei der Koppelflansch (110) einen durchgehenden inneren Kanal (111) umfasst, um den Durchgang eines Gaseinlass- und/oder Gasauslassrohrs (103) zu ermöglichen, und mindestens eine erste durchgehende innere Schrauböffnung (112), die ein erstes Innengewinde (112a) umfasst,
- mindestens eine Klemmschraube (115), die mit einem Klemmkopf (115a) versehen ist und in die mindestens eine erste durchgehende innere Schrauböffnung (112) eingeschraubt werden kann,
- eine Dichtung (118), die gegen die mindestens eine der oberen (45) und unteren (46) Klemmplatte und gegen eine erste Endfläche (110a), die einer zweiten Endfläche (110b) gegenüberliegt, des Koppelflansches (110) positioniert ist,
und dadurch, dass die mindestens eine der oberen (45) und unteren (46) Klemmplatte mindestens eine zweite innere Schrauböffnung (113) aufweist, die ein zweites Innengewinde (113a) gegenüber dem ersten Innengewinde (112a) umfasst, wobei die mindestens eine Klemmschraube (115) geeignet ist, um zur Befestigung des Koppelflansches (90) an mindestens einer der oberen (45) und unteren (46) Klemmplatte in die mindestens eine zweite innere Schrauböffnung (113) eingeschraubt zu werden, und eine durchgehende Gasdurchgangsleitung (102) umfasst, die dazu bestimmt ist, in fluidischer Verbindung mit dem Festoxidstapel (20) vom Typ SOEC/SOFC und dem Gaseinlass- und/oder Gasauslassrohr (103) zu stehen.

2. Anordnung nach Anspruch 1, **dadurch gekennzeichnet, dass** die mindestens eine der oberen (45) und unteren (46) Klemmplatte und der Koppelflansch (110) aus demselben Material, bevorzugt aus austenitischem Edelstahl, hergestellt sind.

3. Anordnung nach Anspruch 1 oder 2, **dadurch gekennzeichnet, dass** das Gaseinlass- und/oder Gasauslassrohr (103) eine spiralförmige Wicklung (103e) aufweist, die bevorzugt mindestens vier Windungen umfasst.

4. Anordnung nach einem der vorhergehenden Ansprüche, **dadurch gekennzeichnet, dass** die mindestens eine Klemmschraube (115) und der Koppelflansch (110) aus demselben Material bestehen, bevorzugt aus austenitischem Edelstahl.

5. Anordnung nach einem der vorhergehenden Ansprüche, **dadurch gekennzeichnet, dass** die Anzahl der Klemmschrauben (115), die Anzahl der ersten durchgehenden inneren Schrauböffnungen (112) und die Anzahl der zweiten inneren Schrauböffnungen (113) zwischen 2 und 10 liegt und bevorzugt gleich 4 ist.

6. Anordnung nach einem der vorhergehenden Ansprüche, **dadurch gekennzeichnet, dass** der Koppelflansch (110) mindestens eine Schulter (120) an der Seitenfläche (110c) des Koppelflansches (110) aufweist, bevorzugt von konkaver Form.

7. Anordnung nach einem der vorhergehenden Ansprüche, **dadurch gekennzeichnet, dass** sie eine obere Endplatte (43) und eine untere Endplatte (44) umfasst, zwischen denen die Vielzahl der elektrochemischen Zellen (41) und die Vielzahl der Zwischenelemente (41) eingeklemmt sind.

8. System (130), **dadurch gekennzeichnet, dass** es Folgendes umfasst:
- eine Anordnung (80) nach einem der vorhergehenden Ansprüche,
- einen Ofen (10), an den mindestens ein Gaseinlass- und/oder Gasauslassrohr (103) angeschlossen ist und an den der bei hoher Temperatur betreibbare Festoxidstapel (20) vom Typ SOEC/SOFC für die Zufuhr und den Auslass von Gasen über das mindestens eine dichte Hochtemperaturkopplungssystem (90) gekoppelt ist.

9. Verfahren zur dichten Hochtemperaturkopplung eines Festoxidstapels (20) vom Typ SOEC/SOFC, das mit Hilfe einer Anordnung (80) nach einem der vorhergehenden Ansprüche oder eines Systems (130) nach Anspruch 8 durchgeführt wird, **dadurch gekennzeichnet, dass** es den Schritt des Koppelns des Festoxidstapels (20) vom Typ SOEC/SOFC an mindestens ein Gaseinlass- und/oder Gasauslassrohr (103) über das mindestens eine dichte Hochtemperaturkopplungssystem (90) umfasst.

10. Verfahren nach Anspruch 9, **dadurch gekennzeichnet, dass** es den Schritt der Wärmebehandlung des Koppelflansches (110) und der mindestens einen Spannschraube (115) vor dem Koppeln umfasst.

11. Verfahren nach Anspruch 10, **dadurch gekennzeichnet, dass** der Schritt der Wärmebehandlung aus einer progressiven Erwärmung besteht, bevorzugt mit der Kadenz von 5 °C/min, bis zu einer vorbestimmten Wärmebehandlungstemperatur, bevorzugt zwischen 600 und 950°C, noch bevorzugter zwischen 700 und 870 °C, um ein Plateau bei der vorher festgelegten Wärmebehandlungstemperatur zu erreichen, bevorzugt während einer Dauer zwischen 10 Min. und mehreren Stunden, bevorzugt zwischen 10 Min. und 1 Stunde, und dann aus einer progressiven Abkühlung, bevorzugt mit der Kadenz von 5 °C/min, bis zur Ausgangstemperatur.

12. Verfahren nach Anspruch 10 oder 11, **dadurch gekennzeichnet, dass** die mindestens eine Spannschraube (115) vor dem Koppeln der Verwendung einer hochtemperaturbeständigen Antifresserpaste unterzogen wird.

13. Verfahren nach Anspruch 12, **dadurch gekennzeichnet, dass** die Antifresserpaste in ihrer Zusammensetzung einen Massenanteil an Cr₃-Chrompulver zwischen 10 und 90%, bevorzugt in der Größenordnung von 50 %, aufweist.

## Claims

1. Assembly (80), including:
- a solid-oxide stack (20) of the SOEC/SOFC type operating at high temperature, including:
- a plurality of electrochemical cells (41) each formed by a cathode, an anode and an electrolyte interposed between the cathode and the anode, and a plurality of intermediate interconnectors (42) each arranged between two adjacent electrochemical cells (41),
- a system (60) for clamping the solid-oxide stack (20) of the SOEC/SOFC type, including a top clamping plate (45) and a bottom clamping plate (46), between which the solid-oxide stack (20) of the SOEC/SOFC type is gripped, each clamping plate (45, 46) including at least two clamping orifices (54), the clamping system (60) further including:
- at least two clamping rods (55) intended to each extend through a clamping orifice (54) of the top clamping plate (45) and through a corresponding clamping orifice (54) in the bottom clamping plate (46) to enable the top (45) and bottom (46) clamping plates to be assembled together,
- clamping means (56, 57, 58) at each clamping orifice (54) of the top (45) and bottom (46) clamping plates intended to cooperate with said at least two clamping rods (55) to enable the top (45) and bottom (46) clamping plates to be assembled together,
**characterised in that** it further includes:
- at least one system (90) for the coupling, gastight at high temperature, of the solid-oxide stack (20) of the SOEC/SOFC type, attached to at least one of the top (45) and bottom (46) clamping plates, including:
- a coupling flange (110) attached to said at least one of the top (45) and bottom (46) clamping plates, the coupling flange (110) comprising a through internal conduit (111) to enable a gas inlet and/or outlet tube (103) to pass, and at least one first through internal screwing orifice (112) including a first internal thread (112a),
- at least one clamping screw (115), provided with a clamping head (115a), able to be screwed into said at least one first through internal screwing orifice (112),
- a seal (118), positioned between said at least one of the top (45) and bottom (46) clamping plates and against a first end face (110a), opposite to a second end face (110b), of the coupling flange (110),
and **in that** said at least one of the top (45) and bottom (46) clamping plates includes at least one second internal screwing orifice (113) comprising a second internal thread (113a) opposite the first internal thread (112a), said at least one clamping screw (115) being able to be screwed into said at least one second internal screwing orifice (113) for attaching the coupling flange (90) to said at least one of the top (45) and bottom (46) clamping plates, and includes a through gas-passage conduit (102), intended to be in fluidic communication with the solid-oxide stack (20) of the SOEC/SOFC type and said gas inlet and/or outlet tube (103).

2. Assembly according to claim 1, **characterised in that** said at least one of the top (45) and bottom (46) clamping plates and the coupling flange (110) are produced from the same material, in particular austenitic stainless steel.

3. Assembly according to claim 1 or 2, **characterised in that** the gas inlet and/or outlet tube (103) includes a spiral winding (103e), comprising in particular at least four turns.

4. Assembly according to one of the preceding claims, **characterised in that** said at least one clamping screw (115) and the coupling flange (110) are produced from the same material, in particular austenitic stainless steel.

5. Assembly according to any one of the preceding claims, **characterised in that** the number of clamping screws (115), the number of first through internal screwing orifices (112) and the number of second internal screwing orifices (113) is between 2 and 10, in particular is equal to 4.

6. Assembly according to any one of the preceding claims, **characterised in that** the coupling flange (110) includes at least one shoulder (120) on the lateral surface (110c) of the coupling flange (110), in particular concave in shape.

7. Assembly according to any one of the preceding claims, **characterised in that** it includes a top end plate (43) and a bottom end plate (44), between which the plurality of electrochemical cells (41) and the plurality of intermediate connectors (42) are gripped.

8. System (130), **characterised in that** it includes:
- an assembly (80) according to any one of the preceding claims,
- a furnace (10), to which at least one gas inlet and/or outlet tube (103) is connected, and to which the solid-oxide stack (20) of the SOEC/SOFC type operating at high temperature is coupled for the entry and exit of gas by means of said at least one coupling system (90) gastight at high temperature.

9. Method for the coupling, gastight at high temperature, of a solid-oxide stack (20) of the SOEC/SOFC type implemented by means of an assembly (80) according to any one of the preceding claims or a system (130) according to claim 8, **characterised in that** it includes the step of coupling the solid-oxide stack (20) of the SOEC/SOFC type to at least one gas inlet and/or outlet tube (103) by means of said at least one coupling system (90) gastight at high temperature.

10. Method according to claim 9, **characterised in that** it includes the step of heat treatment of the coupling flange (110) and of said at least one clamping screw (115) before coupling.

11. Method according to claim 10, **characterised in that** the heat treatment step consists of a progressive heating, in particular at a rate of 5°C/min, up to a predetermined heat-treatment temperature, in particular lying between 600 and 950°C, in particular again between 700 and 870°C, to reach a plateau at the predetermined heat-treatment temperature, in particular during a period of between 10 min and several hours, in particular between 10 min and 1 hour, and then progressive cooling, in particular at a rate of 5°C/min, to the initial temperature.

12. Method according to claim 10 or 11, **characterised in that**, before coupling, said at least one clamping screw (115) is subjected to the use of an anti-binding paste resistant to high temperature.

13. Method according to claim 12, **characterised in that** the anti-binding paste has in its composition a weight proportion of chromium powder Cr₃ of between 10 and 90%, in particular of the order of 50%.
